# EUROPÄISCHE PATENTSCHRIFT

(11) **EP 1 466 110 B1**
(45) Veröffentlichungstag und Bekanntmachung des Hinweises auf die Patenterteilung: **16.11.2005**
(21) Anmeldenummer: 03702446.0
(22) Anmeldetag: 15.01.2003
(51) Int. Cl.: F16H 29/18

(54) **SATELLITENGETRIEBE**
SATELLITE GEARING
ENGRENAGE PLANETAIRE

(30) Priorität: 18.01.2002 DE 10201738
(43) Veröffentlichungstag der Anmeldung: 13.10.2004
(73) Patentinhaber: Satellite Gear System Ltd., Dublin 6 (IE)
(72) Erfinder: FISCHER, Herwig, DE-41063 Mönchengladbach (DE)
(74) Vertreter: Vomberg, Friedhelm
(86) Internationale Anmeldenummer: PCT/EP2003/000355
(87) Internationale Veröffentlichungsnummer: WO 2003/060348

(56) Entgegenhaltungen:
- DE-A- 19 953 643
- GB-A- 821 857
- US-B1- 6 327 926

## Beschreibung

Die Erfindung betrifft ein Satellitengetriebe mit einem Antriebs- und einem Abtriebselement, die durch Verschiebung in beliebige zueinander konzentrische oder exzentrische Lagen unterschiedliche Drehzahlübersetzungen ermöglichen und von denen eines als Ringscheibe mit einer Umfangsnut und das andere als Sternkörper mit Radialnuten ausgebildet ist, und mit Satelliten, die auf der Ringscheibe gekuppelt werden und mittels Übertragungsstiften das Drehmoment in den Sternkörper über tragen.

Nach der EP 0 708 896 B1 ist ein stufenlos oder quasi stufenlos verstellbares formschlüssiges Satellitengetriebe bekannt, das ein Antriebs- und ein Abtriebselement sowie mehrere einzelne Räder besitzt, die gemeinsam ein Satellitenrad darstellen, das mit einem Zentralrad in einer permanenten Formschlussverbindung steht. Werden das Verhältnis der wirksamen Radien des Satellitenrades und des Zentralrades und die gegenseitige exzentrische Lage des Satellitenrades und des Zentralrades zueinander durch geeignete Mittel variiert, wird in entsprechender Weise das Drehzahlverhältnis zwischen dem Antriebs- und dem Abtriebselement bestimmt. Die das Satellitenrad bildenden Räder durchlaufen bei exzentrischer Lage zu dem Zentralrad einen drehmomentübertragenden Lastweg und einen lastfreien Weg zyklisch, wobei die Räder einerseits um die Satellitenradachse und andererseits über eine richtungsgeschaltete Kupplung nur in eine Richtung um ihre eigene Achse drehbar angeordnet sind. Beim Übergang vom lastfreien Weg zum Lastbogenweg übertragen die Räder durch Formschlusseingriff bei blockierter Eigenrotation das jeweils anliegende Drehmoment.

Eine Ungleichförmigkeit der Drehmomentübertragung wird durch Variation der durch den Lastbogen bestimmten Radien und/oder der wirksamen Tangentialkomponenten durch eine zyklische Regelung zumindest teilweise kompensiert. In einem konkreten Ausführungsbeispiel, das in dieser Druckschrift beschrieben wird, werden die Kupplungselemente auf dem Umfang des Antriebselementes angebracht und können auf der Abtriebsseite durch dort vorgesehene radiale Nuten unterschiedliche Laufradien einnehmen. Die Kupplungselemente werden dabei über verschiedene, richtungsgeschaltete Kraft- und/oder Formschlusswirkungen so in Eingriff gebracht, dass immer dasjenige Kupplungselement das Drehmoment übernimmt, das zur höchsten Winkelgeschwindigkeit im Abtriebselement führt.

In der gattungsbildende EP 1 003 984 B1 wird eine Weiterbildung eines solchen Getriebes mit Satelliten bzw. Klemmelementen beschrieben, die aus einem ein- oder mehrteiligen Grundkörper und aus einem ein- oder mehrteiligen Kontaktkörper bestehen, der in der drehmomentübertragenden Stellung in der Führung des Antriebselementes sperrend anliegt, wobei vorstehende Klemmkörperzapfen oder ein mit dem Klemmkörper verbundenes Element zweischnittig, d.h. jeweils zwei axial versetzte Teile aufweisend, in radialen Führungen des Abtriebselementes angeordnet ist. Die Klemmelemente können nach einer weiteren dort beschriebenen Ausgestaltung auch Kontaktkörper mit einem unrunden Querschnitt aufweisen, wobei ein Flächenabschnitt der Kontaktkörper mit seinem Krümmungsradius etwa der Flächenkrümmung der Ringnutwandung der Ringscheibe angepasst ist, mit der die genannten Flächenabschnitte der Kontaktkörper in der drehmomentübertragenden Stellung eine reibschlüssige flächige Anlage bilden, so dass die Hertz'sche Pressung minimiert wird, wobei das Verhältnis der Radien zwischen 0,6 und 1,4 liegen soll.

Nach einer weiteren Varianten der Erfindung, die Gegenstand der DE 199 53 643 A1 ist, wird eine formschlüssige Freilaufkupplung vorgeschlagen, bei der ein Hohl- oder Zahnrad einer Welle in Kupplungsrichtung in Eingriff gebracht wird mit Umlaufelementen, die mit der anderen Welle verbunden sind, wobei jedes der Umlaufelemente mit mehr als einem Zahn des Zahnrades in formschlüssige Verbindung gebracht wird. Die Umlaufelemente führen durch die drehmomentführende Umfangskraft am Übertragungsstift eine Dreh- oder Gleitbewegung aus, womit sie je nach Lastrichtung in Eingriff mit dem Zahnrad gebracht oder aus dem Eingriff mit dem Zahnrad gelöst werden.

Prinzipbedingt entstehen Ungleichförmigkeiten dadurch, dass sich die wirksamen Radien auch innerhalb des Lastbogens, jenem Kreissegment, in dem die Satelliten gekuppelt sind, ändern und damit Übersetzungsschwankungen verursachen.

Die unterschiedlichen Radien, welche die Übersetzungsschwankungen verursachen, sind begründet durch die Tatsache, dass der Satellit einerseits auf dem Umfang der Ringscheibe rotiert, andererseits jedoch mit dem Sternkörper in Formschluss der Radialnut verbunden ist. Deshalb führt der Übertragungsstift innerhalb des Lastbogens, also im verriegelten Zustand des Satelliten, eine radiale Gleitbewegung aus und ändert damit den wirksamen Radius der Übersetzung. Wenn das Getriebe so eingebaut ist, dass das Drehmoment von der Ringscheibe in den Sternkörper (eine Sternscheibe) übertragen wird, so ist prinzipbedingt der wirksame Radius in der Sternscheibe kleiner als der Laufradius in der Ringscheibe, da Satellitengetriebe stets ins Schnelle, d.h. zu höheren Drehzahlen, übersetzen und das Verhältnis der wirksamen Radien das Übersetzungsverhältnis bestimmt. Unterstellt man, dass zum Radienausgleich der Übertragungsstift innerhalb des Lastbogens bei einer bestimmten

Übersetzung einen Ausgleichsweg von z.B. 1 mm zurücklegen muss, so beträgt bei einem angenommenen Antriebsradius von 20 mm und einem Übersetzungsverhältnis von i = 2 der Abtriebsradius 10 mm, womit der Ausgleichsweg mit 1 mm in Bezug auf den Abtriebsradius eine Veränderung von 10 % darstellt. Ein Ausgleich im Antriebsradius bewirkt, dass sich die genannte Änderung von 1 mm auf dem Antriebsradius nur mit 5 % bemerkbar macht, womit der negative Einfluss der relativen Radienveränderung halbiert werden würde. Ähnliche Überlegungen gelten für die Winkelabweichung der Umfangskräfte. Ohne ins Detail auf die Kinematik einzugehen, ergibt sich, dass die Ungleichförmigkeit erheblich reduziert werden kann, wenn der Radienausgleich in Bezug auf die Umfangsbahn des Antriebes und nicht auf die Umfangsbahn des Abtriebes erfolgt. Tatsächlich führt diese Kinematik bei einem Übersetzungsverhältnis von i = 2 und bei i = 1 zu einer vollständig gleichförmigen Übertragung und bei allen übrigen Übersetzungen zu minimierten Ungleichförmigkeiten.

Es ist Aufgabe der vorliegenden Erfindung, die genannten Übersetzungsschwankungen ganz oder zumindest teilweise zu kompensieren.

Diese Aufgabe wird durch das Satellitengetriebe nach Anspruch 1 gelöst.

Erfindungsgemäß weist zur Reduzierung oder Eliminierung von Ungleichförmigkeiten durch Variation der durch den Lastbogen bestimmten wirksamen Radien jeder Satellit eine Radialnut auf, in der der Übertragungsstift innerhalb des Lastbogens zumindest im wesentlichen relativ zum Mittelpunkt der Ringscheibe führbar ist.

Vorzugsweise ist die Radialnut derart ausgestaltet, dass zumindest im wesentlichen keine Bewegung des Übertragungsstiftes in Richtung des Mittelpunktes des Sternkörpers möglich ist.

In einer ersten Ausführungsform sind die Radialnuten der Satelliten so lang, dass der gesamt Ausgleichsweg sowohl im Lastbogen als auch im Leerbogen in diesen Radialnuten ablaufen kann. Die Sternscheibe ist in diesem Fall eine Scheibe mit fest fixierten Übertragungsstiften, die in den Nuten auf den Satelliten radial gleiten und in Umfangsrichtung das Drehmoment übertragen.

In einer weiteren Ausführungsform ist die Radialnut der Satelliten nur so lang, dass der Ausgleich innerhalb des Lastbogens durch eine Gleitbewegung in dieser Radialnut erreicht wird und der Gleitweg innerhalb des Leerbogens in Nuten der Sternscheibe oder in Koppelelementen oder sonstigen ähnlichen bekannten Übertragungsgliedern erfolgt.

Nach einer weiteren Ausführungsform der Erfindung ist vorgesehen, dass durch Wahl geometrischer Abmessungen und/oder wirksamer Reibungskoeffizienten der Übertragungsstift in den Nuten des Sternkörpers im Leerbogen, d.h. beim Durchlaufen des lastfreien Weges, leichter gleitet als in den Radialnuten, so dass die Gleitbewegung im Leerbogen in den Nuten des Sternkörpers erfolgt und im Lastbogen in den Nuten der Satelliten.

Vorzugsweise ist der Durchmesser des Übertragungsstiftes in dem Teil größer ausgebildet, der in der Nut des Sternkörpers geführt wird als in dem Teil, der in der Radialnut des Satelliten geführt wird.

Insbesondere ist erfindungsgemäß die Lastflanke der Nut des Sternkörpers durch Wahl der Reibungskoeffizienten und/oder durch geometrische Konturgebung so ausgebildet, dass sie einen höheren Gleit- oder Rollwiderstand gegenüber den Kontaktflanken des Übertragungsstiftes oder etwaigen mit dem Übertragungsstift verbundenen Gleitsteinen aufweist als die Leerflanke und/oder in den Radialnuten des Satelliten umgekehrt die Lastflanke einen geringeren Widerstand aufweist als die Leerflanke. Eine Erhöhung des Gleitwiderstandes kann hierbei durch Verzahnungen des Stiftes und der Nut in der Sternscheibe zwischen den gegenüberliegenden Flankenseiten bewirkt werden, da der Übertragungsstift bzw. ein hiermit verbundener Gleitstein im Lastbogen stets an einer Seite und im Lehrbogen an der gegenüberliegenden Seite anliegt. Eine weitere Möglichkeit der Reibungskoeffizienten-Beeinflussung besteht darin, einen Gleitstein mit Hülsen unterschiedlicher Radien für je eine der beiden Radialnuten zu wählen, womit unter Last der Gleit- bzw. Rollwiderstand im gewünschten Sinne eingestellt wird.

Nach einer weiteren Variante wird der Übertragungsstift in einen Gleitstein gesteckt, der ähnlich wie ein Klemmkörper je nach Lastrichtung in einer der beiden Radialnuten verriegelt, so dass im Leerbogen bzw. im Lastbogen die Gleitbewegung in dem gewünschten Sinne erfolgt. Grundsätzlich ist auch möglich, mittels Koppelelementen die Rotation dieser Koppelelemente durch geeignete Mechanismen im Lastbogen zu behindern und so die Relativbewegung auf die Satellitennut zu verlagern.

Um sicherzustellen, dass der Gleitweg im Lastbogen zur Verfügung steht, wird vorzugsweise der Übertragungsstift über eine Anfederung in der Nut des Satelliten im Leerbogen so an einem Ende gehalten wird, dass diese Nut einen genügend freien Weg für den Radialausgleich im Lastbogen zur Verfügung hält. Über die Anfederung wird bewirkt, dass der Übertragungsstift innerhalb des Leerbogens in der Sternscheiben-Nut gleitet, da ihn die Anfederung zunächst an einer Bewegung in der Satellitennut hindert. Sobald der Lastbogen erreicht wird, steigt die Umfangskraft sprungartig an, so dass der Satellit einkuppelt und das anliegende Drehmoment überträgt. Die Gleitbewegung des Übertragungsstiftes in der Sternscheibe erfährt nun eine erhöhte Reibung, wobei dieser Effekt durch geeignete Gestaltungsgebung zwischen Stift und Nut verstärkt werden kann, so dass der Gleitwiderstand in der Nut des Satelliten geringer wird als in der Sternscheibe.

Zwischen dem Übertragungsstift und der Radialnut der Satelliten bzw. der Sternscheibe kann erfindungsgemäß ein oder je ein Gleitstein angeordnet sein, der die Hertz'sche Pressung in einen Vollflächenkontakt umwandelt. Geeignete Gleitsteine sind beispielsweise in der EP 1 003 984 B1 beschrieben.

Alternativ ist es auch möglich, zur Reduzierung bzw. Eliminierung von Ungleichförmigkeiten des Satellitengetriebes Gleitsteine mit einer Geometrie oder einem Aufbau zu verwenden, die ähnlich wie Klemmkörper-, Klemmrollen- oder Sperrklinkenfreiläufe je nach Lastrichtung in den Radialnuten sperren oder gleiten, so dass der Lastrichtungswechsel beim Eintritt in den Lastbogen in eine Gleitbewegung umschaltet von der Satellitennut auf die Radialnut der Sternscheibe und umgekehrt beim Lastbogenaustritt.

Die Radialnuten in der Sternscheibe können erfindungsgemäß auch über einen Anschlag verfügen, der einen variabel einstellbaren Mindestradius für jedes Übersetzungsverhältnis festlegt und so den Übertragungsstift zwingt, die Radialnut auf dem Satelliten innerhalb des Lastbogens zum geometrischen Ausgleich zu nutzen.

Nach den bisher nach dem Stand der Technik bekannten Ausführungsvarianten besaß die verwendete Sternscheibe geometrisch feststehende Radialnuten. Statt dessen ist es ebenso möglich, benötigte Radialnuten durch Führungselemente zu bilden, die derart auf einer Scheibe angebracht sind, dass eine Änderung der Breite der Radialnut je nach Lastrichtung der Übertragungsstifte möglich ist. Werden die Führungselemente zusammengeführt, verengt sich die hier zwischen gebildete Radialnut, so dass der Übertragungsstift einklemmbar ist und dessen Bewegung in der Nut verhindert wird. Entsprechendes gilt auch für Gleitsteine, die mit den Übertragungsstiften verbunden sind und im Lastbogen eingeklemmt werden um eine weitere Radialbewegung zu verhindern.

Nach einer alternativen Ausführungsform können zur Lösung der erfindungsgemäßen Aufgabe die Radialnuten des Sternkörpers können auch auf separaten Radialführungen angebracht sein, die eine Relativbewegung auf einer Scheibe ausführen können. Vorzugsweise sind die Radialführungen rotatorisch frei aufgehängt. Die Ansteuerung der Bewegung der Radialführungen erfolgt vorzugsweise über eine Nut 31 des Ringkörpers, dessen Position relativ zur exzentrischen Verschiebungsbewegung zur Übersetzungsregelung fixiert ist.

Nach einer weiteren Ausgestaltung der Erfindung besitzen die Satelliten die prinzipiell aus der DE 199 56 643 A1 bekannten Verzahnungen, die im Lastweg in eine entsprechende Verzahnung der als Hohlrad ausgebildeten Ringscheibe formschlüssig eingreift, wobei der Satellit beim Übergang vom Leerweg in den Lastbogen und umgekehrt eine jeweilige Schwenkbewegung ausführt. Um eine sichere Verriegelung zu schaffen, muss das auf den Satelliten wirkende Drehmoment bei vorstellbar ungünstigster Lage des Satelliten und bei schlechtester Schmierung stets größer sein als das Reibungsmoment, das sich aus der Reibungskraft und dem Abstand ergibt, den das erste miteinander in Eingriff kommende Zahnpaar von der Satellitendrehachse hat.

Weitere Ausführungsvarianten sowie hiermit gegebene Vorteile sind aus den Zeichnungen und den nachfolgenden Erläuterungen ersichtlich.

In einer weiteren Ausführungsform wird zur Lösung der Aufgabe der Sternkörper als Trägerschreibe ausgebildet, auf dem einzelne Radialsegmente befestigt sind, die um eine kolinear zur Getriebeachse liegende Achse rotieren können, wobei sie eine zur Trägerschreibe planparallele Lage beibehalten. Vorzugsweise wird dieser Rotation durch eine Anfederung und/oder durch eine Dämpfung ein stabilisierendes Moment entgegengesetzt, so dass Stoßkräfte in Umfangsrichtung, die durch Ungleichförmigkeiten entstehen, abgefedert werden. In einer bevorzugten Ausführung liegen die Pivotpunkte, also die Drehachsen der Radialsegmente auf einer Umfangslinie auf der Trägerscheibe, auf der die Satelliten bei konzentrischer Lage der Ringscheibe und der Trägerscheibe, also bei einem Übersetzungsverhältnis 1 : 1 laufen, so dass die Arbeitsaufnahme der Anfederung bzw. Dämpfung umso größer wird, je größer die Exzentrizität der Trägerscheibe zur Ringscheibe wird. Die Wirkung der Anfederung wird bei einer 1 : 1-Übersetzung zu 0.

In einer weiteren Ausführungsform werden die Radialsegmente durch eine Führung des Übertragungsstiftes bei jeder exzentrischen Lage so geführt, dass sie im wesentlichen nicht auf den Mittelpunkt der Trägerscheibe, sondern auf den Mittelpunkt der Ringscheibe zeigen.

Es zeigen
- Fig. 1a: eine Draufsicht auf ein erfindungsgemäßes Satellitengetriebe in einer Prinzipdarstellung,
- Fig. 1b: eine Schnittansicht entlang Linie A-A in Fig. 1,
- Fig. 1c: eine Detailansicht der Einzelheit B in Fig. 1a,
- Fig. 1d: eine Detailansicht der Einzelheit C in Fig. 1b und
- Fig. 1e und f: jeweilige Darstellungen eines erfindungsgemäßen Satelliten,
- Fig. 2a bis c: jeweils unterschiedliche Ansichten einer weiteren Satellitengetriebeausführungsform und
- Fig. 2d bis g: jeweilige Ansichten eines erfindungsgemäßen Satelliten,
- Fig. 3a und b: jeweilige perspektivische Ansichten einer Sternscheibe mit veränderbaren Radialnuten und
- Fig. 3c und d: jeweilige perspektivische Ansichten einer Ringscheibe,
- Fig. 4: eine prinzipielle Darstellung eines Satelliten in der Rotation zum Zahneingriff mit einer Ringscheibe in der Rotation zum Zahneingriff und
- Fig. 5: eine perspektivische Ansicht einer weiteren Ausführungsform

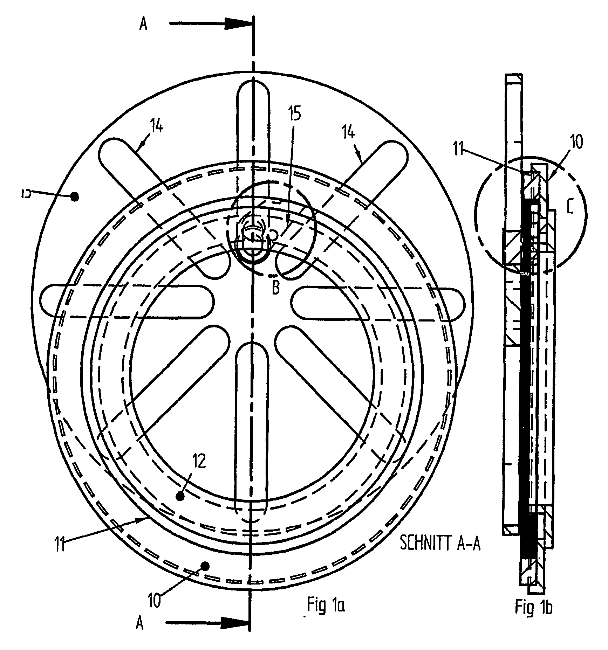

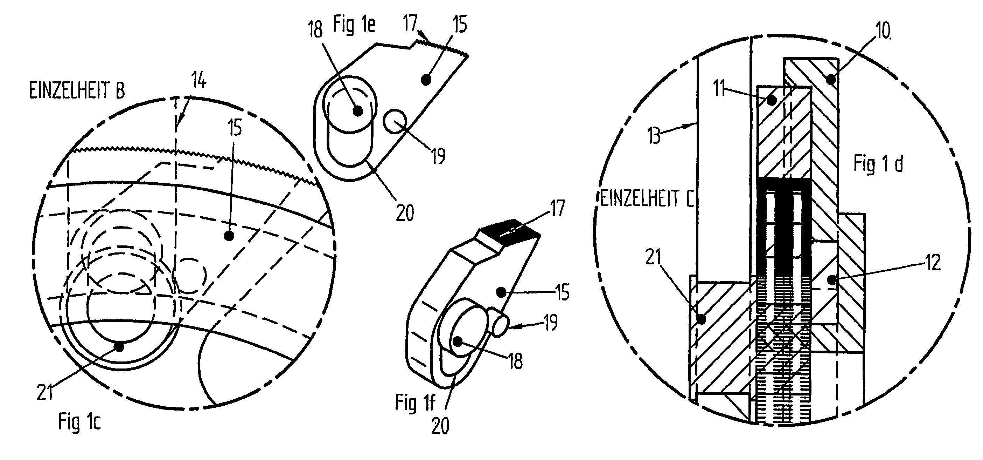

Das in Fig. 1 prinzipiell dargestellte Satellitengetriebe besitzt eine Ringscheibe 10, die als Hohlscheibe mit einer Innenverzahnung 11 ausgeführt ist. Diese Ringscheibe 10 weist femer eine Umfangsnut 12 auf, in der die Satelliten als Klemmelemente zirkular bewegt werden. Die Ringscheibe 10 soll als Antriebselement dienen. Als Abtriebselement ist eine Sternscheibe 13 mit Radialnuten 14 vorgesehen. Das anliegende Drehmoment wird über Satelliten 15 übertragen, die mit ihrer Verzahnung 17 im gekuppelten Zustand in die Verzahnung 11 der Ringscheibe formschlüssig eingreifen. Jeder Satellit wird über eine angeformte Führungskontur 18 in der Umfangsnut 12 geführt. Der weiterhin angeformte Stift 19 des Satelliten verhindert ein Umschlagen des Satelliten im entkuppelten Zustand, da er bei Erreichen eines bestimmten Winkels ebenfalls in der Nut 12 anläuft.

Die erfindungsgemäße Radialnut 20 im Satelliten erlaubt dem Stift 21 eine Ausgleichsbewegung radial zur Ringscheibe 10. Durch den unterschiedlichen Durchmesser des Stiftes 21 und der unterschiedlichen Breite der Nut 20 im Satelliten und der Nut 14 in der Sternscheibe rollt dieser leichter in der Radialnut 20 als in der Nut 14, insbesondere, wenn er unter Last an der Flanke der Nut 14 anliegt.

Nach einer weiteren Ausgestaltung der Erfindung ist es möglich, eine nicht dargestellte Anfederung zu verwenden, die den Stift 21 am Ende der Nut 20 in der gewünschten Endstellung, d.h. am Ende der Nut 20, festhält, so dass der Bewegungsraum zum Radialausgleich im Lastbogen zur Verfügung steht.

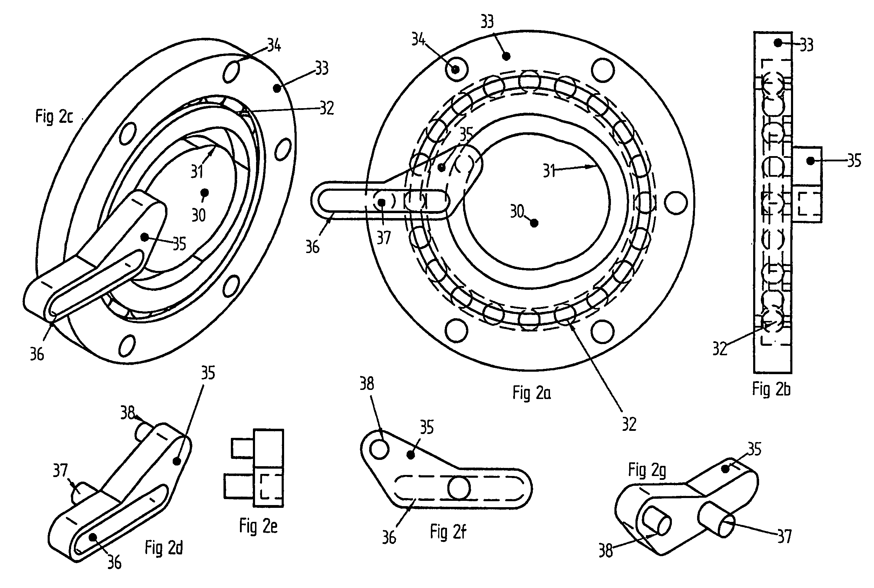

Fig. 2a bis c zeigen eine innere ortsfeste Scheibe 30 mit einer nockenartigen Nut 31, in der Kugeln 32 abrollen können, die das Lager für eine äußere rotierende Scheibe 33 bilden. Bohrungen 34 tragen Radialführungen 35, von denen nur eine von sechs vorgesehenen Führungen dargestellt ist, über Übertragungsstifte 37, die den Stiften 21 gemäß Fig. 1 entsprechen.

Radialnuten 36 sind mit den Übertragungsstiften 37 mit den nicht dargestellten Elementen der Antriebsscheibe im Eingriff. Die Radialführungen 35 können um die Übertragungsstifte 37 rotieren, wobei diese Rotation über Stifte 38 gesteuert wird, die in der nockenartigen Nut 31 geführt werden. Durch die gewählte Ausführungsform führen die Radialnuten stets an der gleichen Stelle, d.h. im Lastbogen, eine Korrekturbewegung als Rotation aus, so dass die Ungleichförmigkeit reduziert wird.

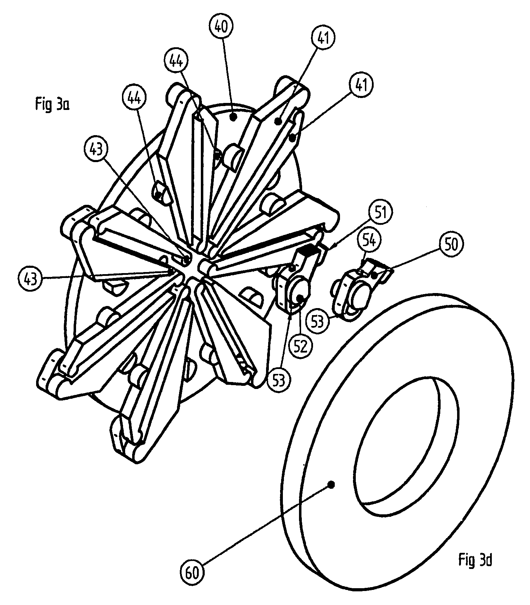

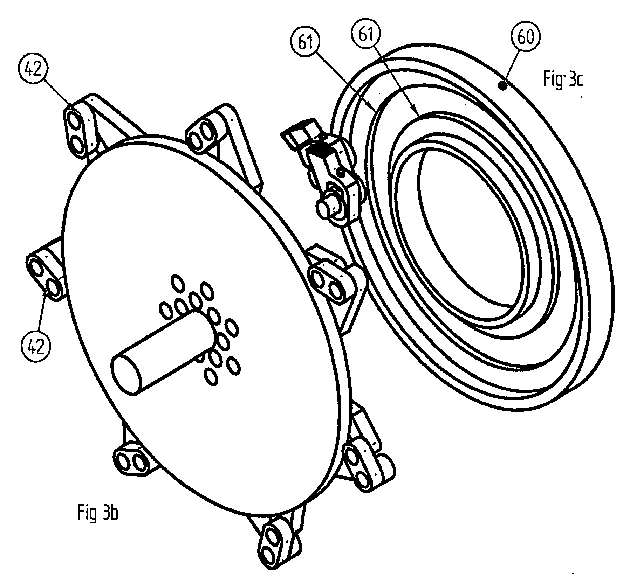

Nach einer weiteren, in Fig. 3a bis d dargestellten Ausführungsform ist der Sternkörper nicht mit geometrisch feststehenden Radialnuten ausgeführt, sondern besitzt statt dessen auf einer Scheibe 40 Führungselemente 41, die mit Klammern 42 verbunden sind und um Achsen 43 rotieren können. Die Lage dieser Achsen 43 zueinander und die Ausrichtung der Klammern 42 ist so gewählt, dass sich die zwischen den Führungselementen 41 gebildete Radialnut, in der Übertragungsstifte 52 der Satelliten 50 gleiten, verengt, sobald die Führungselemente 41 um die Achsen 43 in Drehrichtung des Getriebes rotieren. Diese Rotation wird durch Anschläge 44 begrenzt. Beim Eintritt in den Lastbogen kuppelt jeder Satellit 50, wobei die Lastrichtung wechselt, so dass die Führungselemente 41, die in Freilaufrichtung an einem der Anschläge 44 anliegen, um die Achsen 43 rotieren und dabei die Radialnut schmaler werden lassen. Da sich innerhalb der Radialnut der betreffende Übertragungsstift 52 befindet, wird dessen Rotation blockiert, sobald die Nutbreite kleiner wird als der Durchmesser des Übertragungsstiftes, der gleichzeitig eingeklemmt wird, so dass damit seine weitere Radialbewegung gehindert ist. Die weitere Ausgleichsbewegung kann somit nur in der Nut 53 des Satelliten 50 erfolgen, so dass eine automatische Verlagerung der Ausgleichsbewegung beim Lastbogeneintritt erfolgt. Beim Austritt aus dem Lastbogen laufen die geschilderten Vorgänge analog in umgekehrter Richtung ab.

In einer Ausführung mit Koppeln wird die Rotation der Koppeln durch geeignete Mechanismen im Lastbogen behindert und so die Relativbewegung auf die Satellitennut verlagert.

Eine weitere Möglichkeit, Ungleichförmigkeiten zu minimieren, wird dadurch erreicht, dass die Radialnuten der Sternscheibe einzeln derart bei der Scheibe fixiert sind, dass sie eine Rotationsbewegung und auch eine kombinierte Rotations-TranslationsBewegung ausführen können. Diese Bewegung wird durch einen Führungsstift gesteuert, der in einer nockenförmigen Umfangsnut rotiert, die auf einer feststehenden Scheibe fixiert ist. Die Radialnuten führen damit die beschriebene Bewegung stets an einer ortsfesten Position aus in Relation zur Exzentrizität, also z.B. immer beginnend am Lastbogeneintritt und endend am Lastbogenaustritt bzw. in der Nähe davon, so dass bei geeigneter Kontur der Nockennut eine Verringerung der Ungleichförmigkeit erreicht wird.

Die Relativbewegung in der Übertragung ist stets um so größer, je weiter außen in der Radialnut die Übertragungsstifte laufen, so dass über diesen Parameter der Einfluss des Nockens für jede Exzentrizität unterschiedlich ist, d.h., bei gleichen Nocken kann eine gute Anpassung für jedes denkbare Übersetzungsverhältnis erreicht werden.

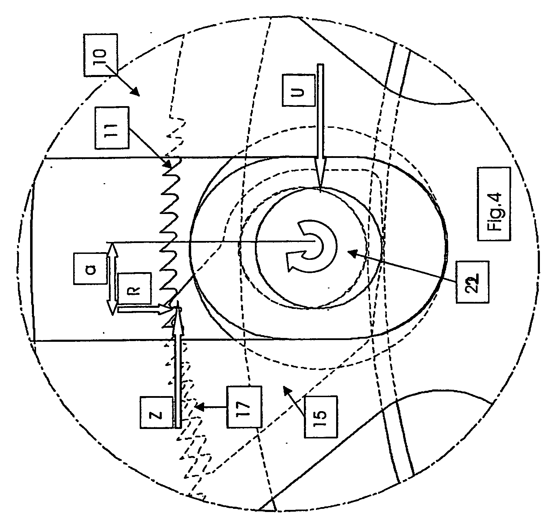

Fig. 4 zeigt einen Satelliten 15 mit einem bestimmten Profil einer Verzahnung 17, die der Verzahnung 11 einer Ringscheibe angepasst ist. Die Darstellung zeigt den Übergang vom Leerbogen in den Lastbogen, bei dem der Satellit 15 eine Schwenkbewegung gemäß Pfeil 22 ausführt. Die dargestellte Umfangskraft U wirkt in Pfeilrichtung über den exzentrischen Übertragungsstift 21 auf den Satelliten 15. Die Zahnkraft Z wirkt über den Kontakt der Verzahnung 17 des Satelliten mit der Verzahnung 11 der Ringscheibe in entgegengesetzter Richtung, so dass der Satellit 15 eine Rotation in Pfeilrichtung ausführt. Dieser Rotation wirkt die Reibungskraft R entgegen, die im Abstand a zur Drehachse wirksam wird und somit ein Drehmoment Mᵣ = Rxa erzeugt.

Die Bedingung einer sicheren Verriegelung ist dann erfüllt, wenn das Drehmoment aus dem Kräftepaar U und Z unter allen Bedingungen, also bei ungünstigster Lage des Satelliten 15 und bei schlechtester Schmierung größer ist als das Reibungsmoment Mᵣ. In diesem Fall nimmt der Satellit immer erst die volle Umfangskraft auf, wenn er im vollen Zahneingriff (Verzahnung 11, 17) anliegt und kann niemals auf der Zahnspitze belastet werden. Unter Berücksichtigung aller Kräfte und Drehmomente, also auch nicht dargestellter dynamischen Kräfte aus Zentrifugal- und Coriolis-Beschleunigungen, die bei hohen Winkelgeschwindigkeiten auf den Satelliten 15 und die Übertragungselemente wirken, sowie unter Berücksichtigung der ebenfalls nicht dargestellten Reibmomente im Übertragungsstift wird das Getriebe so ausgelegt, dass die Summe aller einriegelnden Momente (gemäß Pfeilrichtung 22) stets größer ist als die Summe der entgegengesetzten Drehmomente.

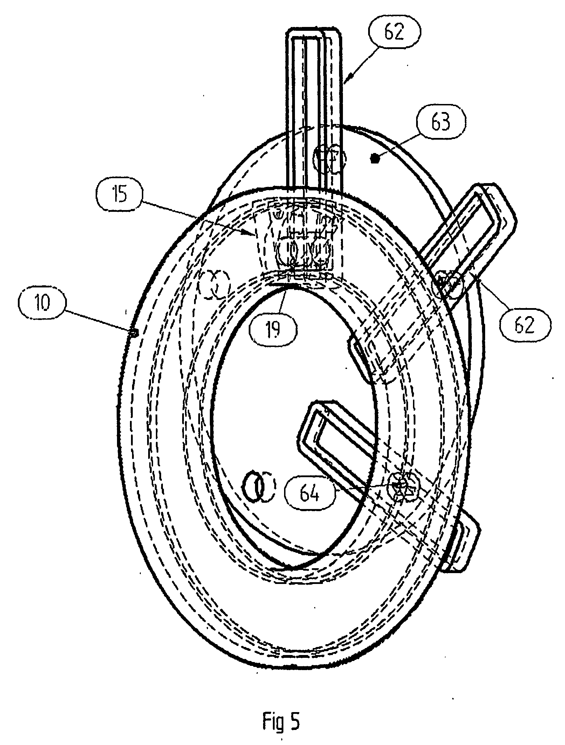

Fig. 5 zeigt eine Ringscheibe 10 mit umlaufenden Satelliten 15, die jeweils durch einen Übertragungsstift 19 die lastführenden Umfangskräfte in Radialsegmente 62 auf einer Trägerscheibe 63 übertragen. Die Drehachsen 64 erlauben dabei eine Rotation der Radialsegmente 62, die durch nicht dargestellte, aber prinzipiell bekannte Feder-/Dämpferelemente in einer 0-Position (radiale Ausrichtung) stabilisiert werden.

Alternativ ist der Übertragungsstift 19 so ausgeführt, dass er formschlüssig in der Ringnut der Ringscheibe 10 liegt und ebenso formschlüssig in der entsprechenden Radialnut eines Radialsegmentes 62 geführt ist. Auf diese Weise werden die Radialsegemente 62 stets zum Mittelpunkt der Ringscheibe 10 ausgerichtet.

### Bezugszeichenliste

- 10: Ringscheibe
- 11: Innenverzahnung
- 12: Umfangsnut
- 13: Sternscheibe
- 14: Radialnuten
- 15: Satelliten
- 17: Verzahnung des Satelliten
- 18: angeformte Führungskontur
- 19: Stift
- 20: Radialnut im Satelliten
- 21: Stift
- 22: Pfeil (Fig. 4)
- 30: ortsfeste Scheibe
- 31: nockenartige Nut
- 32: Kugeln
- 33: rotierende Scheibe
- 34: Bohrungen
- 35: Radialführungen
- 36: Radialnuten
- 37: Übertragungsstift
- 38: Stift
- 40: Scheibe
- 41: Führungselemente
- 42: Klammern
- 43: Achsen
- 44: Anschläge
- 50: Satelliten
- 51: Radialnut
- 52: Übertragungsstift
- 53: Nut
- 60: Ringscheibe
- 61: Umfangsnut
- 62: Radialsegment
- 63: Trägerscheibe
- 64: Drehachse

## Patentansprüche

1. Satellitengetriebe mit einem Antriebs- und einem Abtriebselement, die durch Verschiebung in beliebige zueinander konzentrische oder exzentrische Lagen unterschiedliche Drehzahlübersetzungen ermöglichen und von denen eines als Ringscheibe (10) mit einer Umfangsnut (12) und das andere als Sternkörper (13) mit Radialnuten (14) ausgebildet ist, und mit Satelliten (15, 35, 50), die auf der Ringscheibe (10) gekuppelt werden und mittels Übertragungsstiften (21, 52) das Drehmoment in den Sternkörper (13) übertragen,
**dadurch gekennzeichnet,**
**dass** zur Reduzierung oder Eliminierung von Ungleichförmigkeiten durch Variation der durch den Lastbogen bestimmten wirksamen Radien jeder Satellit (15, 35, 50) eine Radialnut (20, 51) aufweist, in der der Übertragungsstift (21, 52) innerhalb des Lastbogens zumindest im wesentlichen relativ zum Mittelpunkt der Ringscheibe (10) führbar ist.

2. Satellitengetriebe nach Anspruch 1, **gekennzeichnet, durch** eine Radialnut (20, 51) deren Lage zumindest im wesentlichen keine Bewegung des Übertragungsstiftes (21, 52) in Richtung des Mittelpunktes des Sternkörpers (13) erlaubt und/oder **dadurch gekennzeichnet, dass durch** Wahl geometrischer Abmessungen und/oder Reibungskoeffizienten der Übertragungsstift in den Nuten (14) des Sternkörpers im Leerbogen, d.h. beim Durchlaufen des lastfreien Weges, leichter gleitet als in den Radialnuten (20), so dass die Gleitbewegung im Leerbogen in den Nuten (14) des Sternkörpers (13) erfolgt und im Lastbogen in den Nuten (20) der Satelliten (15).

3. Satellitengetriebe nach einem der Ansprüche 1 oder 2, **dadurch gekennzeichnet, dass** der Durchmesser des Übertragungsstiftes (21) in dem Teil größer ist, der in der Nut (14) des Sternkörpers geführt wird, als in dem Teil, der in der Radialnut (20) des Satelliten geführt wird und/oder dass der Übertragungsstift (21) über eine Anfederung in der Nut (20) im Leerbogen so an einem Ende gehalten wird, dass die Nut (20) einen genügend freien Weg für den Radialausgleich im Lastbogen zur Verfügung hält, wobei vorzugsweise die Lastflanke der Nuten (14) durch Reibpaarung und/oder Konturgebung einen höheren Gleit- oder Rollwiderstand gegenüber den Kontaktflanken des Übertragungsstiftes (21) oder den mit dem Übertragungsstift verbundenen Gleitsteinen aufweist als die Leerflanke und/oder in den Nuten (20) umgekehrt die Lastflanke einen geringeren Widerstand aufweist als die Leerflanke.

4. Satellitengetriebe nach einem der Ansprüche 1 bis 3, **dadurch gekennzeichnet, dass** ein oder je ein Gleitstein zwischen dem Übertragungsstift (21) und der Nut (14) und/oder der Nut (20) liegt, der die Hertz'sche Pressung in einen Vollflächenkontakt umwandelt und/oder dass die Gleitsteine eine Geometrie oder einen Aufbau aufweisen, so dass ähnlich wie Klemmkörper-, Klemmrollen- oder Sperrklinkenfreiläufe je nach Lastrichtung in den radialen Nuten sperren oder gleiten, so dass der Lastrichtungswechsel beim Eintritt in den Lastbogen die Gleitbewegung umschaltet von der Nut (14) auf die Nut (20) und umgekehrt beim Lastbogenaustritt.

5. Satellitengetriebe nach einem der Ansprüche 1 bis 4, **dadurch gekennzeichnet, dass** die Radialnuten (14) in der Sternscheibe (13) über einen Anschlag verfügen, der einen variabel einstellbaren Mindestradius für jedes Übersetzungsverhältnis festlegt und so den Übertragungsstift (21) zwingt, die Radialnut (20) auf dem Satelliten innerhalb des Lastbogens zum geometrischen Ausgleich zu nutzen und/oder dass die Radialführungen rotatorisch frei aufgehängt sind und das die Ansteuerungen der Bewegung der Radialführungen über eine Nut (31) erfolgt, die auf einem Bauteil angebracht ist, dessen Position relativ zur exzentrischen Verschiebungsbewegung der Übersetzungsregelung fixiert ist.

6. Satellitengetriebe nach einem der Ansprüche 1 bis 5, **dadurch gekennzeichnet, dass** die Radialnuten durch Führungselemente (41) gebildet werden, die so angebracht sind, dass sich die Breite der Radialnut ändert, je nach Lastrichtung der Übertragungsstifte (52), die in den Radialnuten gleiten und/oder dass sich die von den Führungselementen (41) gebildeten Radialnuten so in der Breite verringern, dass die Übertragungsstifte bzw. die mit den Übertragungsstiften verbundenen Gleitsteine im Lastbogen eingeklemmt werden und eine weitere Radialbewegung verhindert wird.

7. Satellitengetriebe mit einem Antriebs- und einem Abtriebselement, die durch Verschiebung in beliebige zueinander konzentrische oder exzentrische Lagen unterschiedliche Drehzahlübersetzungen ermöglichen und von denen eines als Ringscheibe (10) mit einer Umfangsnut (12) und das andere als Sternkörper (13) mit Radialnuten (14) ausgebildet ist, und mit Satelliten (15, 35, 50), die auf der Ringscheibe (10) gekuppelt werden und mittels Übertragungsstiften (21, 52) das Drehmoment in den Sternkörper (13) übertragen, **dadurch gekennzeichnet, dass** die Radialnuten (36) der Sternscheibe (33) nicht auf der Scheibe fixiert, sondern auf separaten Radialführungen (35) angebracht sind, die eine Relativbewegung auf die Scheibe (33) ausführen können, die Ungleichförmigkeiten reduziert bzw. eliminiert.

8. Satellitengetriebe nach einem der Ansprüche 1 bis 7, **dadurch gekennzeichnet, dass** die Satelliten (15) eine Verzahnung (17) aufweisen, die im Lastweg in eine entsprechende Verzahnung (11) der als Hohlrad ausgebildeten Ringscheibe (10) formschlüssig eingreift, wobei der Satellit (15) beim Übergang vom Leerweg in den Lastbogen und umgekehrt jeweils eine Schwenkbewegung ausführt, vorzugsweise durch eine Formgestaltung des Satelliten (15) durch die das beim Übergang vom Leerweg in den Lastbogen auftretende Drehmoment größer ist als das sich aus dem Produkt aus der Reibungskraft (R) und dem Abstand (a), den das erste miteinander in Eingriff kommende Zahnpaar von der Satellitendrehachse hat, ergebende Drehmoment (Mᵣ).

9. Satellitengetriebe mit einem Antriebs- und einem Abtriebselement, die durch Verschiebung in beliebige, zueinander konzentrische oder exzentrische Lagen unterschiedliche Drehzahlübersetzungen ermöglichen und von denen eines als Ringscheibe (10) mit einer Umfangsnut (12) und das andere als Sternkörper mit Radialnuten ausgebildet ist, und mit Satelliten, die auf der Ringscheibe (10) gekuppelt werden und mittels Übertragungsstiften (19) das Drehmoment in den Sternkörper übertragen, **dadurch gekennzeichnet, dass** der Sternkörper aus einer Trägerschreibe (63) mit einzelnen hierauf befestigten Radialsegmenten (62) besteht, die um eine kolinear zur Getriebeachse liegenden Achse rotieren können, wobei sie eine zur Trägerscheibe (63) planparallele Lage beibehalten, femer vorzugsweise mit Radialsegmenten (62), in ihrer Radialstellung durch Feder- und/oder Dämpferelemente stabilisiert werden. wobei weiterhin vorzugsweise der Übertragungsstift (19) der Satelliten (15) formschlüssig in der Ringnut der Ringscheibe (10) liegt und ebenso formschlüssig in der Radialnut des Radialsegmentes (62) geführt ist.

10. Satellitengetriebe nach Anspruch 9, **dadurch gekennzeichnet, dass** die Drehachsen der Radialsegmente (62) auf einer Umfangslinie der Trägerscheiben (63) liegen, auf der die Satelliten (15) bei konzentrischer Lage der Ringscheibe (10) und des Sternkörpers (62, 63) laufen und/oder dass die Radialsegmente (62) durch eine Führung des Übertragungsstiftes (19) so geführt werden, dass sei bei einer exzentrischen Lage der Ringscheibe (10) zum Sternkörper (62, 63) zumindest im wesentlichen auf den Mittelpunkt der Ringscheibe (10) ausgerichtet sind.

## Claims

1. Satellite gearing with an input element and an output element that can provide different gear ratios by shifting into various concentric or eccentric positions and that include a ring disk (10) with an annular groove (12) and a star body (13) with radial grooves (14), and satellites (15, 35, 50) which are coupled to the ring disk (10) and that transmit torque to the star body (13) by means of coupling pins (21, 52),
**characterized in that**
in order to reduce or eliminate irregularities by varying the effective radius in a load path, each satellite (15, 35, 50) has a radial slot (20, 51) in which can move the respective coupling pin (21, 52) when in the load path at least relative to a center of the ring disk (10).

2. The satellite gearing according to claim 1, **characterized by** a radial groove (20, 51) whose position permits generally no movement of the coupling pin (21, 52) relative to a center of the star body (13) and/or **characterized in that** as a result of the relative geometric relationships and/or the coefficient of friction, the coupling pin in the grooves (14) of the star body moves more easily in the slip path, that is when moving through the load-free path, than in the radial grooves (20) so that the sliding movement in the slip path takes place in the grooves (14) of the star body (13) and in the load path in the grooves (20) of the satellites (15).

3. The satellite gearing according to one of claims 1 or 2, **characterized in that** the coupling pin (21) is of greater diameter in the part which is guided in the groove (14) of the star body than in the part which is guided in the radial groove (20) of the satellites and/or that the coupling pin (21) is spring biased in the slip path into an end of the groove (20) so that the groove (20) keeps free a sufficient free path for radial compensation in the load path, whereby preferably the load flank of the grooves (14) has greater sliding or rolling friction as a result of surface type and/or shape relative to the contact flanks of the coupling pin (21) or slide bodies carried by the coupling pin than the slip flank and/or that in the grooves (20) oppositely the load flank has less resistance than the slip flank.

4. Satellite gearing according to one of claims 1 to 3, **characterized in that** one or one respective slide body is provided between the coupling pin (21) and the groove (14) and/or the groove (20) so as to convert the Hertz pressure into full surface contact and/or that the slide bodies have a shape or construction such that like locking bodies, rollers, or free-running clutches according to the load direction they lock or slide in the radial grooves so that the load-direction change is initiated on entry into the load path from the groove (14) to the groove (20) and is reversed on leaving the load path.

5. Satellite gearing according to one of claims 1 to 4, **characterized in that** the radial grooves (14) in the star disk (13) have a stop that sets a variable adjustable minimum radius for each transmission ratio and thus forces the coupling pin (21) to use the radial groove (20) on the satellite when in the load path for geometric compensation and/or that the radial guides are suspended free for rotation and that control of movement of the radial guides is effected by a groove (31) that is arranged on a part whose position is fixed relative to the eccentric movement of the transmission control.

6. Satellite gearing according to one of claims 1 to 5, **characterized in that** the radial grooves are defined by guide elements (41) that are set up such that they can change the width of the radial groove according to the load directions of the coupling pins (52) that slide in the radial grooves and/or that the radial grooves formed by the guide elements (41) can be narrowed so much that the coupling pins or the slide bodies connected with the coupling pins are clamped in the load path and cannot move further radially.

7. Satellite gearing with an input element and an output element that can provide different transmission ratios by shifting into various concentric or eccentric positions and that include a ring disk (10) with an annular groove (12) and a star body (13) with radial grooves (14), and satellites (15, 35, 50) which are coupled to the ring disk (10) and that transmit torque to the star body (13) by means of coupling pins (21, 52) **characterized in that** the radial grooves (36) of the star disk (33) are not fixed on the disk but instead are formed in separate radial guides (35) that can move relative on the disk (33) to reduce or eliminate irregularities.

8. Satellite gearing according to one of claims 1 to 7, **characterized in that** the satellites (15) have teeth (17) that mesh in the load path with complementary teeth (11) of the ring disk (10) being formed as a hollow wheel, whereby the satellite (15) is pivoting when moving between the load path and the slip path, preferably by the satellite (15) being shaped such that on transitioning from the slip path into the load path the torque is greater than the torque (Mᵣ) that is the product of the frictional force (R) and the spacing (a) between the first teeth to mesh and the satellite axis.

9. Satellite gearing with an input element and an output element that can provide different transmission ratios by shifting into various concentric or eccentric positions and that include a ring disk (10) with an annular groove (12) and a star body with radial grooves, and satellites which are coupled to the ring disk (10) and that transmit torque to the star body by means of coupling pins (19), **characterized in that** the star body is formed by a support disk (63) with individually secured radial segments (62) that rotate about axes collinear to the drive axis so that they always lie in positions parallel to the support disk (63), further preferably with radial segments (62) which are stabilized in their radial positions by springs and/or dampers, whereby further preferably the coupling pin (19) of the satellite (15) fits snugly in the annular groove of the ring disk (10) and also fits snugly in the radial groove of the radial segment (62).

10. Satellite gearing according to claim 9, **characterized in that** the pivot axes of the radial segments (62) lie on an edge line on the support disk (63) on which the satellites (15) ride when the ring disk (10) and the star body (62, 63) are concentric and/or **in that** the radial segments (62) are set in a guide of the coupling pin (19) that, when the ring disk (10) and the star body (62, 63) are eccentric, that are oriented at least generally in line with the center of the ring disk (10).

## Revendications

1. Engrenage satellite avec un élément moteur et un élément de sortie qui, en étant déplacés dans des positions quelconques où ils sont concentriques ou excentriques l'un par rapport à l'autre, permettent des rapports différents de vitesse de rotation et dont l'un est réalisé en tant que disque annulaire (10) ayant une rainure circonférentielle (12) et dont l'autre est réalisé comme corps en étoile (13) présentant des rainures radiales (14), et avec des satellites (15, 35, 50) qui sont couplés sur ledit disque annulaire (10) et transmettent le couple dans le corps en étoile (13) au moyen de goupilles de transmission (21, 52), **caractérisé par le fait**
**que**, pour réduire ou éliminer des irrégularités en variant les rayons effectifs déterminés par l'arc de charge, chaque satellite (15, 35, 50) présente une rainure radiale (20, 51) dans laquelle ladite goupille de transmission (21, 52) peut être guidée, à l'intérieur de l'arc de charge, au moins pour l'essentiel relativement au centre du disque annulaire (10).

2. Engrenage satellite selon la revendication 1, **caractérisé par** une rainure radiale (20, 51) dont la position ne permet pas, au moins pour l'essentiel, de mouvement de la goupille de transmission (21, 52) en direction du centre du corps en étoile (13), et/ou **caractérisé par le fait que**, par le choix de dimensions géométriques et/ou de coefficients de friction, la goupille de transmission glisse - dans l'arc à vide, c'est-à-dire lorsqu'elle parcourt la distance exempte de charge - plus facilement dans les rainures (14) du corps en étoile que dans les rainures radiales (20), de sorte que le mouvement glissant se fait, dans l'arc à vide, dans les rainures (14) du corps en étoile (13) et, dans l'arc de charge, dans les rainures (20) des satellites (15).

3. Engrenage satellite selon l'une des revendications 1 ou 2, **caractérisé par le fait que** le diamètre de la goupille de transmission (21) est plus grand dans la partie qui est guidée dans la rainure (14) du corps en étoile que dans la partie qui est guidée dans la rainure radiale (20) du satellite, et/ou que, dans l'arc à vide, la goupille de transmission (21) est tenue par un ressort dans la rainure (20) à une extrémité de telle manière que la rainure (20) met à la disposition un trajet libre suffisant pour la compensation radiale dans l'arc de charge, de préférence, grâce au couple frottant et/ou au contour correspondant, le flanc de charge des rainures (14) présentant une résistance plus importante au glissement ou au roulement par rapport aux flancs de contact de la goupille de transmission (21) ou par rapport aux glisseurs reliés à la goupille de transmission que le flanc à vide, et/ou, inversement, dans les rainures (20), le flanc de charge présentant une résistance plus faible que le flanc à vide.

4. Engrenage satellite selon l'une des revendications 1 à 3, **caractérisé par le fait qu'**un glisseur ou respectivement un glisseur est situé entre la goupille de transmission (21) et la rainure (14) et/ou la rainure (20), lequel transforme la pression hertzienne en un contact sur toute la surface, et/ou que lesdits glisseurs présentent une géométrie ou une construction telle que, selon la direction de charge, ils bloquent ou glissent dans les rainures radiales, presque comme les roues libres à corps de blocage, à galets de blocage ou à cliquet d'arrêt, de sorte que, à l'entrée dans l'arc de charge, le changement de la direction de charge fait transférer le mouvement glissant de la rainure (14) à la rainure (20) et inversement à la sortie de l'arc de charge.

5. Engrenage satellite selon l'une des revendications 1 à 4, **caractérisé par le fait que** les rainures radiales (14) dans le disque en étoile (13) disposent d'une butée qui détermine un rayon minimal réglable de façon variable pour chaque rapport de transmission et force ainsi la goupille de transmission (21) à utiliser la rainure radiale (20) sur le satellite à l'intérieur de l'arc de charge pour la compensation géométrique, et/ou que les guides radiaux sont suspendus librement en rotation et que les commandes des mouvements des guides radiaux se font par une rainure (31) qui est réalisée sur un composant dont la position est fixée relativement au mouvement de déplacement excentrique du dispositif de réglage de transmission.

6. Engrenage satellite selon l'une des revendications 1 à 5, **caractérisé par le fait que** les rainures radiales sont formées d'éléments de guidage (41) qui sont disposés de telle manière que la largeur de la rainure radiale change, selon la direction de charge des goupilles de transmission (52) qui glissent dans les rainures radiales, et/ou que les rainures radiales formées des éléments de guidage (41) sont réduites en largeur de telle sorte que les goupilles de transmission ou bien les glisseurs reliés aux goupilles de transmission sont serrés dans l'arc de charge et qu'un autre mouvement radial est évité.

7. Engrenage satellite avec un élément moteur et un élément de sortie qui, en étant déplacés dans des positions quelconques où ils sont concentriques ou excentriques l'un par rapport à l'autre, permettent des rapports différents de vitesse de rotation et dont l'un est réalisé en tant que disque annulaire (10) ayant une rainure circonférentielle (12) et dont l'autre est réalisé comme corps en étoile (13) présentant des rainures radiales (14), et avec des satellites (15, 35, 50) qui sont couplés sur ledit disque annulaire (10) et transmettent le couple dans le corps en étoile (13) au moyen de goupilles de transmission (21, 52), **caractérisé par le fait que** les rainures radiales (36) du disque en étoile (33) ne sont pas fixées sur le disque, mais sont disposées sur des guides radiaux séparés (35) aptes à exercer un mouvement relatif par rapport au disque (33), qui réduit ou bien élimine des irrégularités.

8. Engrenage satellite selon l'une des revendications 1 à 7, **caractérisé par le fait que** les satellites (15) présentent une denture (17) qui, dans le trajet de charge, engrène à engagement positif dans une denture correspondante (11) du disque annulaire (10) réalisé comme roue creuse, le satellite (15) - lors de la transition du trajet à vide à l'arc de charge et vice versa - exerçant respectivement un mouvement pivotant, de préférence **par le fait que** le satellite (15) est formé de telle manière que le couple se présentant lors de la transition du trajet à vide à l'arc de charge est plus grand que le couple (Mᵣ) résultant du produit de la force de friction (R) et de la distance (a) qui existe entre la première paire de dents venant en prise et l'axe de rotation du satellite.

9. Engrenage satellite avec un élément moteur et un élément de sortie qui, en étant déplacés dans des positions quelconques où ils sont concentriques ou excentriques l'un par rapport à l'autre, permettent des rapports différents de vitesse de rotation et dont l'un est réalisé en tant que disque annulaire (10) ayant une rainure circonférentielle (12) et dont l'autre est réalisé comme corps en étoile présentant des rainures radiales, et avec des satellites qui sont couplés sur ledit disque annulaire (10) et transmettent le couple dans le corps en étoile au moyen de goupilles de transmission (19), **caractérisé par le fait que** le corps en étoile se compose d'un disque de support (63) avec des segments radiaux individuels (62) fixés sur celui-ci qui peuvent tourner autour d'un axe colinéaire à l'axe de l'engrenage tout en maintenant une position plane-parallèle au disque de support (63), en outre de préférence avec des segments radiaux (62) qui, dans leur position radiale, sont stabilisés par des éléments faisant ressort et/ou par des éléments amortisseurs, en outre de préférence la goupille de transmission (19) des satellites (15) se trouvant à engagement positif dans la rainure annulaire du disque annulaire (10) et étant guidée aussi à engagement positif dans la rainure radiale du segment radial (62).

10. Engrenage satellite selon la revendication 9, **caractérisé par le fait que** les axes de rotation des segments radiaux (62) sont situés sur une ligne circonférentielle du disque de support (63) sur laquelle se déplacent les satellites (15) lorsque le disque annulaire (10) et le corps en étoile (62, 63) sont concentriques l'un par rapport à l'autre, et/ou que les segments radiaux (62) sont guidés par un guide de la goupille de transmission (19) de telle manière que, lorsque le disque annulaire (10) se trouve dans une position excentrique par rapport au corps en étoile (62, 63), ils sont orientés au moins pour l'essentiel vers le centre du disque annulaire (10).
